# EUROPÄISCHE PATENTSCHRIFT

(11) **EP 2 848 358 B1**
(45) Veröffentlichungstag und Bekanntmachung des Hinweises auf die Patenterteilung: **08.08.2018**
(21) Anmeldenummer: 14184595.8
(22) Anmeldetag: 12.09.2014
(51) Int. Cl.: B23Q 1/48, B23Q 3/06, B23Q 7/14, B23Q 16/00

(54) **Palette zum Transport von zu bearbeitenden Werkstücken**
Pallet for transporting workpieces to be machined
Palette de transport de pièces à usiner

(30) Priorität: 13.09.2013 AT 505842013
(43) Veröffentlichungstag der Anmeldung: 18.03.2015
(73) Patentinhaber: Fill Gesellschaft m.b.H., 4942 Gurten (AT)
(72) Erfinder: Prenter, Bruno, 4943 Geinberg (AT); Schachinger, Reinhard, 4973 St. Martin (AT); Feichtenschlager, Georg, 4941 Mernbach (AT)
(74) Vertreter: Burger, Hannes

(56) Entgegenhaltungen:
- EP-A1- 0 117 557
- EP-A1- 1 391 262
- EP-A2- 0 111 368
- DE-A1- 2 234 868
- DE-C1- 4 406 368
- GB-A- 2 010 138
- JP-A- S6 451 251
- US-A- 4 482 043
- US-B1- 6 619 895

## Beschreibung

Die Erfindung betrifft eine Palette gemäß dem Oberbegriff von Anspruch 1.
Eine Vorrichtung der eingangs genannten Art ist beispielsweise aus der EP 1 391 262 A1 bekannt geworden.
Bei herkömmlichen Bearbeitungslinien zur Bearbeitung von Werkstücken kommen Paletten zum Einsatz, die zum Transport des Werkstückes zu und von einer oder mehreren Arbeitsstation(en) dienen, in welchen eine Bearbeitung des Werkstückes stattfindet. Das Werkstück ist bei den bekannten Paletten fix montiert und in seiner Position relativ zu der Palette nicht gut bzw. gar nicht veränderbar. Dies führt vor allem bei der Herstellung von Werkstücken mit einer komplexen Formgebung zu starken Einschränkungen - vor allem hinsichtlich einer Vollautomatisierung der erforderlichen Bearbeitungsschritte.
Es ist daher eine Aufgabe der Erfindung, die oben genannten Nachteile des Stands der Technik zu überwinden.
Diese Aufgabe wird mit einer Palette der eingangs genannten Art erfindungsgemäß durch die Merkmale des kennzeichnenden Teils von Anspruch 1 gelöst.
Die erfindungsgemäße Lösung ermöglicht es auf einfache Weise, die Position des Werkstückes auf der Palette entsprechend den Bearbeitungserfordernissen optimal anzupassen, ohne das Werkstück von der Palette trennen zu müssen. Zudem wird bei dichtaneinander liegenden Paletten das Eindringen von Spänen in einen zwischen unmittelbar aufeinanderfolgenden Paletten liegenden Bereich verhindert. Gemäß einer vorteilhaften Variante der Erfindung, die ein stufenloses Einstellen eines Drehwinkels zwischen dem Unterbau und dem Aufbau ermöglicht, kann es vorgesehen sein, dass der Aufbau kraft- und/oder reibschlüssig mit dem Unterbau verbunden ist. Zusätzlich zu einem Kraft- und/oder Reibschluss kann es weiters vorgesehen sein, dass der Unterbau und der Aufbau im Bereich einer Verbindungsstelle je eine Verzahnung aufweisen, die in einer gegenüber dem Unterbau fixierten Position des Aufbaus miteinander in Eingriff sind. Durch die Verzahnung kann parallel zu einer Teilungsebene von Unterbau und Aufbau der Palette eine formschlüssige Verbindung geschaffen werden, wodurch sich eine sehr gute Sicherung gegen ein ungewolltes Verdrehen des Aufbaus gegenüber dem Unterbau verhindern lässt. Durch die Verzahnung ist auch eine bessere Genauigkeit bei der Positionierung des Aufbaus gegeben. Bei einer reibschlüssigen Verbindung kann zwar die Position des Aufbaus gegenüber dem Unterbau stufenlos verstellt werden, aber dafür muss ein für das Verdrehen eventuell verwendeter Aktor sehr genau gesteuert werden. Bei der Verzahnung kann eine Toleranz bis annähernd zur halben Teilung der Verzahnung in Kauf genommen werden. Diese ist daher entsprechend günstig herzustellen, wobei die erforderliche Genauigkeit je nach Palette vorgegeben sein und bei der Montage eingestellt werden kann.

Ein Verdrehen des Aufbaus gegenüber dem Unterbau wird dadurch begünstigt, dass die Verzahnungen je entlang zumindest eines Abschnittes einer Kreislinie oder Bogenlinie angeordnet sind.

Um die Palette auf Schienen verfahren zu können, kann der Unterbau an einem dem Aufbau abgewandten Endbereich Führungselemente, insbesondere Führungsbacken oder Führungsleisten, für Schienen aufweisen.

Um eine Zentrierung der Palette in einer Querrichtung der Schienen in einer Arbeitsstation zu erleichtern, kann zumindest eines der Führungselemente zumindest eine in Längsrichtung des Führungselementes verlaufende Nut aufweisen.

Die Abdeckung kann an einem Ende höher ausgebildet sein, als an dem anderen Ende, sodass das höher ausgebildete Ende der Abdeckung einer ersten Palette das niedriger ausgebildete Ende einer benachbarten Palette übergreifen kann, um eine gute Abdichtung zu gewährleisten. Weiters können die Abdeckungen an ihren zusammenwirkenden Enden je zumindest eine Labyrinthdichtung aufweisen bzw. bilden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer erfindungsgemäßen Palette;
- Fig. 2: eine Vorderansicht der Palette aus Fig. 1;
- Fig. 3: eine Seitenansicht der Palette aus Fig. 1;
- Fig. 4: eine Draufsicht auf die Palette aus Fig. 1;
- Fig. 5: eine perspektivische Ansicht des Aufbaus der Palette aus Fig. 1;
- Fig. 6: eine Draufsicht auf den Unterbau aus Fig. 1;
- Fig. 7: Einen Schnitt entlang der Linie VII-VII in Fig. 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters sei darauf hingewiesen, dass die Figuren übergreifend beschrieben sind.

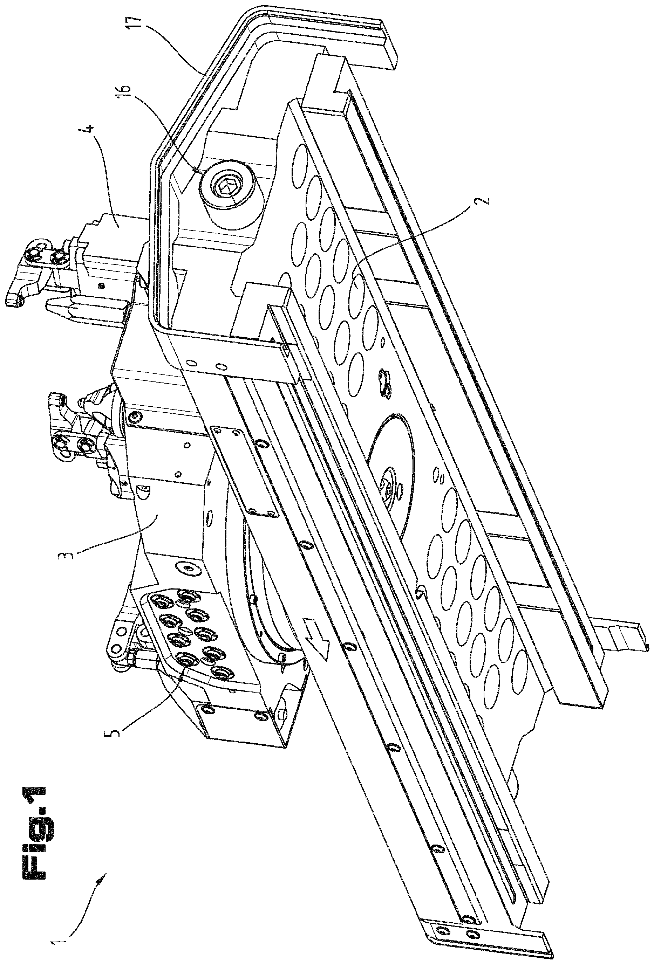

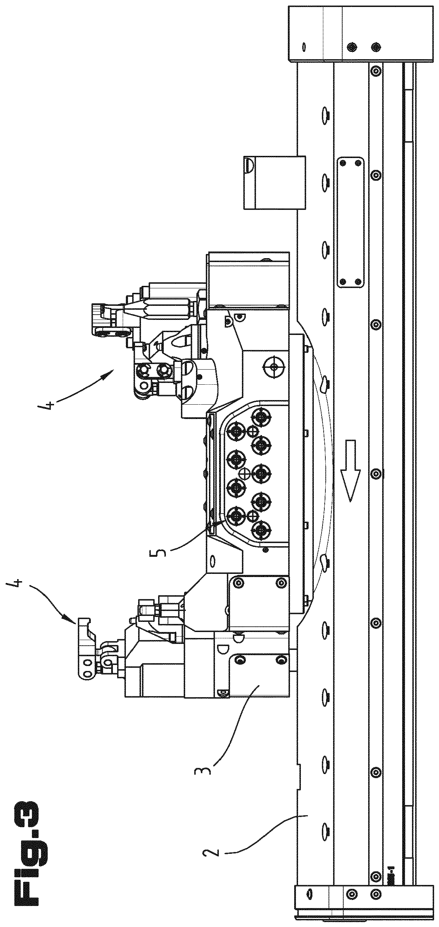

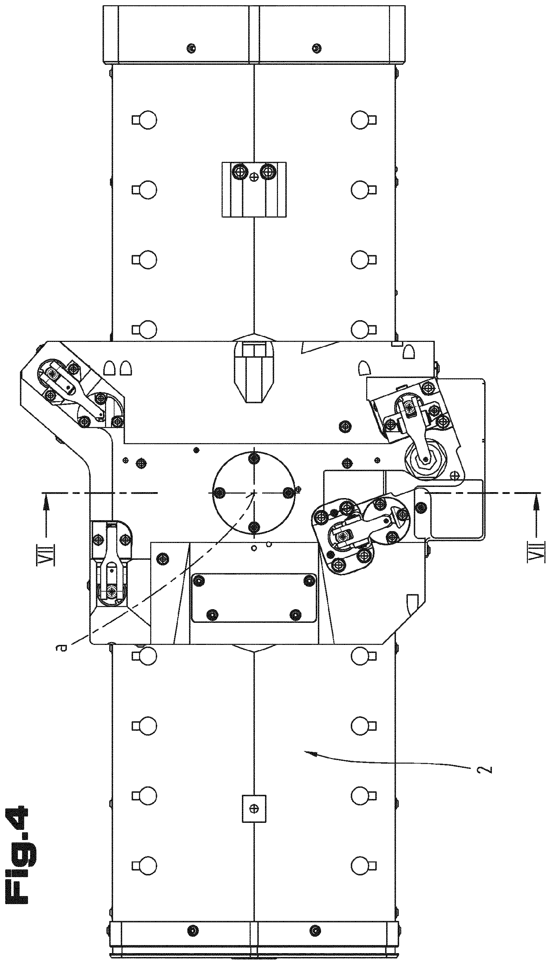

Gemäß den Darstellungen in den Figuren 1 bis 4 weist eine erfindungsgemäße Palette 1 zum Transport von zu bearbeitenden Werkstücken, einen Unterbau 2 und einen Aufbau 3 auf. Auf dem Aufbau ist eine Spannvorrichtung 4 mit mehreren Spannmitteln angeordnet. Über Medienanschlüsse 5 kann die Spannvorrichtung in an sich bekannter Art betätigt werden. So kann die Spannvorrichtung 4 nach Einspannen des Werkstückes in an sich bekannter Art über die Medienanschlüsse hydraulisch oder pneumatisch geschlossen werden.

Der Aufbau 3 kann gemeinsam mit der Spannvorrichtung 4 zum Einstellen einer vorgebbaren Position gegenüber dem Unterbau 2 um eine Drehachse a verdreht werden. Die Drehachse a verläuft bevorzugterweise normal zu einer Teilungsebene von Unterbau 2 und Aufbau.3. Nach Einstellen der gewünschten Position kann der Aufbau 3 gegen ein Verdrehen gegen ein ungewolltes Verdrehen um die Drehachse a gegenüber dem Unterbau 2 fixiert werden. Der Aufbau 3 kann beispielsweise kraft- und/oder reibschlüssig mit dem Unterbau 2 verbunden sein.

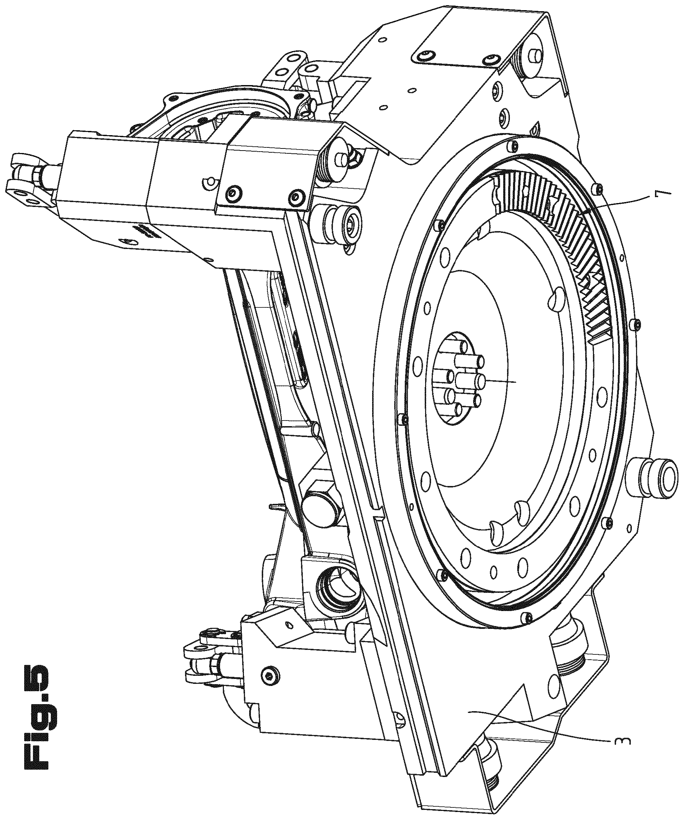

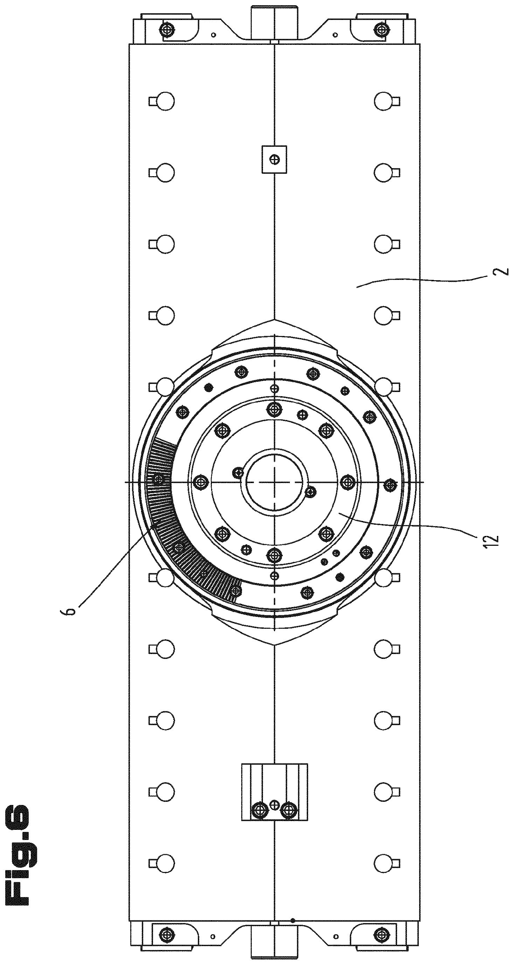

Gemäß der in den Figuren 5 und 6 dargestellten Ausführungsform können der Unterbau 2 und der Aufbau 3 im Bereich einer Verbindungsstelle je eine Verzahnung 6, 7 aufweisen, die in einer gegenüber dem Unterbau 2 fixierten Position des Aufbaus 3 miteinander in Eingriff stehen. Durch die Verzahnungen 6 und 7 lässt sich eine Verdrehung des Aufbaus 2 entsprechend einer durch den Abstand der Zähne der jeweiligen Verzahnung 6, 7 definierten Schrittweite durchführen. Die Verzahnungen 6 und 7 sind bevorzugt kongruent und konzentrisch zueinander ausgebildet und entlang einer Kreislinie oder eines Abschnittes derselben oder einer Bogenlinie angeordnet.

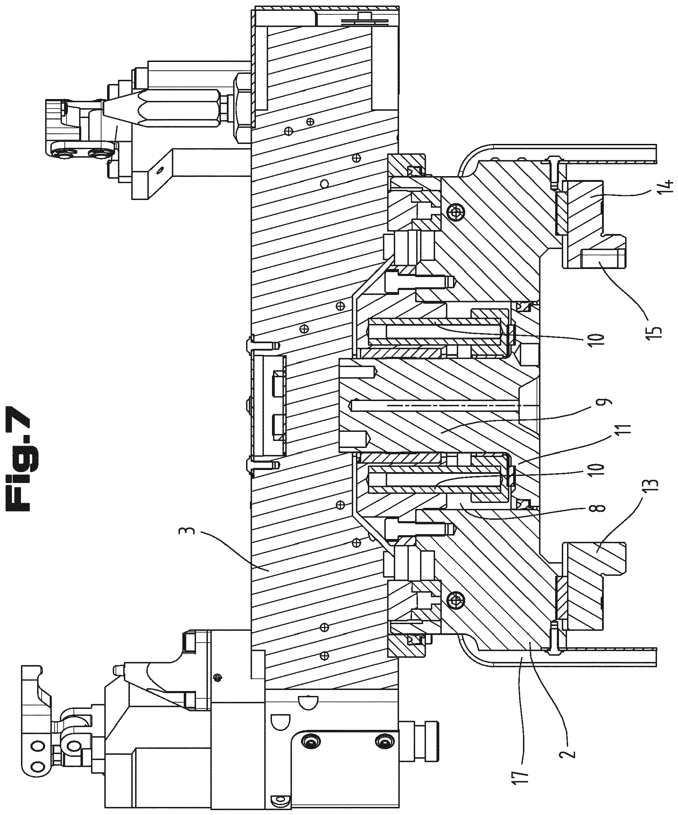

Wie aus Figur 7 ersichtlich ist, kann der Aufbau 3 mit einem kolbenförmigen Bauteil 9 verbunden sein. Der Bauteil 9 greift in eine Aufnahme 8 des Unterbaus 2 ein. Vorteilhafterweise ist der kolbenförmige Bauteil 9 unverlierbar in dem Unterbau 2 angeordnet und weist zumindest in seinem Bereich der in der Aufnahme 8 angeordnet ist, einen T-förmigen Querschnitt auf. Darüber hinaus kann der kolbenförmige Bauteil 9 parallel zu der Drehachse a verschiebbar in dem Unterbau 2 gelagert sein. Der Aufbau 2 wiederum kann an dem kolbenförmigen Bauteil 9 um die Drehachse a verdrehbar gelagert sein, wobei der Aufbau 2 in Richtung der Drehachse von dem Bauteil 9 nicht gelöst werden kann, was jedoch eine gewisse Verschiebbarkeit des Aufbaus 2 gegenüber dem Bauteil 9 entlang der Drehachse a nicht ausschließt.

Weiters ist der Bauteil 9 mit einer Druck- oder Zugkraft beaufschlagbar, um den Aufbau 3 gegenüber dem Unterbau 2 zu fixieren. Bei der in Fig. 7 dargestellten Ausführungsform ist ein druckerzeugendes Mittel 10 in der Aufnahme 8 des Unterbaus 2 angeordnet. Als druckerzeugendes Mittel 10 kommt in der dargestellten Variante eine Schraubenfeder, beispielsweise mit einem rechteckigen Querschnitt, zum Einsatz, wobei jedoch anstelle einer Schraubenfeder auch andere Federn, wie beispielsweise (Gummi-)Schichtfedern, pneumatische, hydraulische, hydropneumatische oder (elektro-)mechanische Aktoren zur Druckerzeugung verwendet werden können.

In der gezeigten Variante ist die Schraubenfeder konzentrisch mit einem Schaft des Bauteils 9 angeordnet und stützt sich mit einem Ende an einem Vorsprung 11 des Bauteils 9 einerseits und an einer dem zumindest einen Vorsprung 11 in Richtung des Aufbaus 3 gegenüberliegenden Abdeckung der Feder andererseits ab. Die Abdeckung der Feder ist in Fig. 6 mit dem Bezugszeichen 12 versehen und verschließt auch die Aufnahme 8, wobei die Abdeckung 12 mit dem Unterbau 2 beispielsweise mittels Bolzen oder Schrauben verbunden sein kann. Alternativ zur Abstützung 12 kann sich die Schraubenfeder mit ihrem dem Vorsprung 11 gegenüberliegendem, freiem Ende auch an einem inneren Vorsprung oder einer Wand der Aufnahme 8 abstützen. Durch die Kraft der Schraubenfeder wird der Bauteil 9 nach unten bewegt und der Aufbau 3 in Richtung des Unterbaus 2 gezogen, wodurch die Verzahnungen 6 und 7 in Eingriff miteinander gebracht und der Aufbau 3 gegenüber dem Unterbau 2 fixiert wird.

Um den Aufbau 3 von dem Unterbau 2 abzuheben und verdrehen zu können, kann der kolbenförmige Bauteil 9 mit einer in Richtung des Aufbaus 3 wirkenden Kraft beaufschlagbar werden. Dies kann beispielsweise in einer Bearbeitungsstation der Anlage, in welcher die Palette 1 eingesetzt wird, durch einen an dem Vorsprung 11 angreifenden Aktor erfolgen, der den Bauteil 9 in Richtung des Aufbaus 3 drückt und so den mit dem Bauteil 9 verbundenen Aufbau 3 von dem Unterbau 3 trennt bzw. die Verzahnungen 6 und 7 außer Eingriff bringt. Der Aktor, der zum Anheben des Bauteils 9 verwendet wird, kann beispielsweise ein hydropneumatischer, hydraulischer, pneumatischer, mechanischer oder elektromechanischer Aktor sein. Es ist auch möglich nur den Bauteil 9 bzw. den Vorsprung 11 mit einem Druckmedium in Richtung des Aufbaus 3 und gegen die Kraft des druckerzeugenden Mittels 10 zu beaufschlagen, um den Bauteil 9 entsprechend anzuheben und die Verzahnungen 6 und 7 außer Eingriff zu bringen. Nachdem Abheben des Aufbaus 3 von dem Unterbau 2 kann der Aufbau gemäß den Erfordernissen neu ausgerichtet, d.h. um die Drehachse a entsprechend verdreht werden. Nach Absenken des Bauteils 9 in seine Fixierposition können die Verzahnungen 6 und 7 wieder ineinander eingreifen und der Unterbau wird durch die Kraft des druckerzeugenden Mittels 10 wieder in der Position gehalten. Anstelle des druckerzeugenden Mittels 10 könnte auch ein zwischen dem Vorsprung 11 und einem Boden der Aufnahme 8 angeordnetes Zugmittel in Form eines geeigneten Aktors angeordnet sein, um die notwendige Kraft zur Fixierung des Aufbaus 3 gegenüber dem Unterbau 2 zu erzeugen.

Wie aus Fig. 7 weiter erkennbar ist, kann der Unterbau 2 an einem dem Aufbau 3 abgewandten Endbereich Führungselemente 13, 14 für Schienen auf, um auf Schienen einer entsprechenden Bearbeitungsanlage verschoben werden zu können. Um eine Zentrierung bzw. Ausrichtung der Palette 1 in Querrichtung in einer Bearbeitungsstation zu erleichtern bzw. zu ermöglichen, kann mindestens eines der Führungselemente 13, 14 eine verlaufende L-förmige Nut 15 aufweisen.

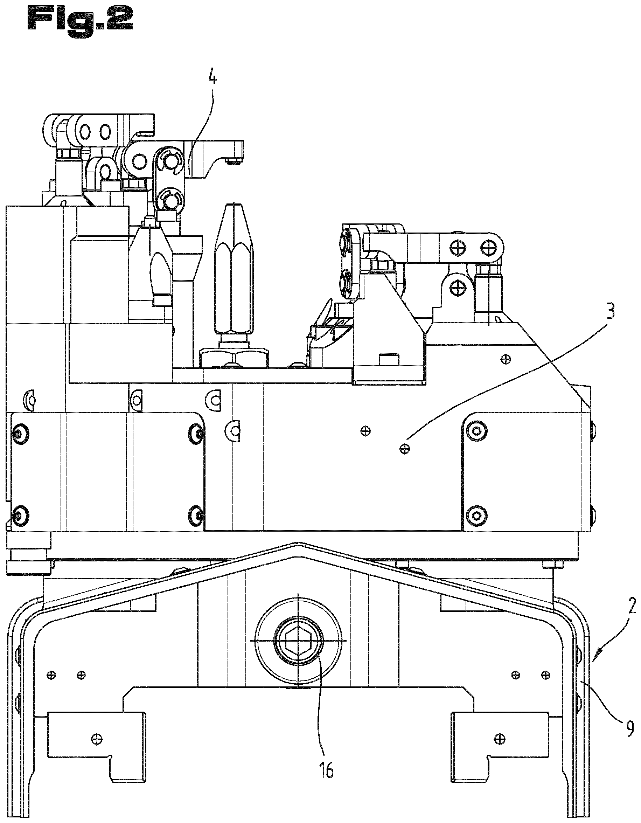

Wie aus den Figuren 1 und 2 ersichtlich ist, kann der Unterbau 2 an seinen stirnseitigen Enden je zumindest einen nach außen abstehenden Puffer 16 aufweisen, die mit Puffern der unmittelbar benachbarten Paletten 1 in einer Bearbeitungsanlage zusammenwirkt. Darüber hinaus können Abdeckbleche 17 vorgesehen sein, welche den jeweils zugeordneten Puffer 16 überdachen und sich über die Breite des jeweiligen stirnseitigen Endes erstrecken. Die Abdeckbleche 17 können hierbei so ausgebildet sein, dass sich die Abdeckbleche zweier benachbarter Paletten 1 in einer Bearbeitungsanlage wie Dachziegel übergreifen, um eine gut abgedichtete Fläche zu bilden und eine Verschmutzung der Schienen zu vermeiden. Weiters können die einander übergreifenden Abdeckbleche 17 zweier Paletten 1 eine Labyrinthdichtung bilden.

Ein Vorschub der Paletten 1 entlang von Schienen in einer Bearbeitungsanlage kann durch einen Schieber, beispielsweise eine pneumatisch, hydraulisch, hydropneumatisch, mechanisch oder elektromechanisch betriebene Schubstange erfolgen. Hierbei kann eine dem Schieber nächstliegende Palette 1 einer Reihe von dicht an dicht liegenden Paletten 1 bzw. die Reihe von Platten 1 entlang der Schienen um eine vorgegebene Strecke vorgeschoben werden, worauf sich der Schieber in eine Ausgangsposition zurückzieht und in den entstandenen Zwischenraum zwischen Schieber und der letzten Palette 1 der Reihe von Platten eine neue Palette 1 eingesetzt wird. So ergibt sich ein Kreislauf, in welchem eine Palette 1 nach der anderen in eine Bearbeitungsstation geschoben wird, in welcher eine Bearbeitung des Werkstückes erfolgt, worauf das bearbeitete Werkstück von der Palette entnommen und die Palette mit einem neuen Werkstück beladen und wieder an den Anfang der Reihe von Paletten 1 gesetzt werden kann.

Abschließend sei noch darauf hingewiesen, dass die Ausführungsbeispiele sich auf mögliche Ausführungsvarianten der erfindungsgemäßen Palette beziehen, wobei an dieser Stelle bemerkt sei, dass die Erfindung nicht auf das speziell dargestellte Ausführungsbeispiel derselben eingeschränkt ist, sondern vielmehr auch alle anderen nicht dargestellten und beschriebenen Ausführungsvarianten, welche unter den Wortlaut des unabhängigen Anspruchs fallen vom Schutzbereich mit umfasst sind.

### Bezugszeichenaufstellung

- 1: Palette
- 2: Unterbau
- 3: Aufbau
- 4: Spannvorrichtung
- 5: Medienschnittstelle
- 6: Verzahnung
- 7: Verzahnung
- 8: Aufnahme
- 9: kolbenförmiger Bauteil
- 10: druckerzeugendes Mittel
- 11: Vorsprung
- 12: Abdeckung
- 13: Führungselement
- 14: Führungselement
- 15: Nut
- 16: Puffer
- 17: Abdeckblech
- a: Drehachse

## Patentansprüche

1. Palette (1) zum Transport von zu bearbeitenden Werkstücken entlang einer Bearbeitungslinie, wobei die Palette (1) einen Unterbau (2) und zumindest einen zumindest eine Spannvorrichtung (4) für das zu bearbeitende Werkstück aufweisenden Aufbau (3) aufweist, wobei der Aufbau (3) mitsamt der zumindest einen Spannvorrichtung (4) gegenüber dem Unterbau (2) um zumindest eine Drehachse (a) verdrehbar und in einer vorgebbaren Position gegen ein Verdrehen des Aufbaus (3) um die Drehachse (a) gegenüber dem Unterbau (2) fixierbar ist, **dadurch gekennzeichnet, dass** der Unterbau (2) an seinen stirnseitigen Enden je zumindest einen nach außen abstehenden Puffer (16) aufweist, wobei der Unterbau (2) an seinen stirnseitigen Enden je zumindest ein Abdeckblech (17) aufweist, das den jeweils zugeordneten Puffer (16) überdacht und sich über die Breite des jeweiligen stirnseitigen Endes erstreckt.

2. Palette nach Anspruch 1, **dadurch gekennzeichnet, dass** der Aufbau (3) kraft- und/oder reibschlüssig mit dem Unterbau (2) verbunden ist.

3. Palette nach Anspruch 1 oder 2, **dadurch gekennzeichnet, dass** der Unterbau (2) und der Aufbau (3) im Bereich einer Verbindungsstelle je eine Verzahnung (6, 7) aufweisen, die in einer gegenüber dem Unterbau (2) fixierten Position des Aufbaus (3) miteinander in Eingriff sind.

4. Palette nach Anspruch 3, **dadurch gekennzeichnet, dass** die Verzahnungen (6, 7) je entlang zumindest eines Abschnittes einer Kreislinie oder Bogenlinie angeordnet sind.

5. Palette nach einem der Ansprüche 1 bis 4, **dadurch gekennzeichnet, dass** der Unterbau (2) an einem dem Aufbau (3) abgewandten Endbereich Führungselemente (13, 14) für Schienen aufweist.

6. Palette nach Anspruch 5, **dadurch gekennzeichnet, dass** zumindest eines der Führungselemente (13, 14) zumindest eine in Längsrichtung des Führungselementes (13, 14) verlaufende Nut (15) aufweist, um eine Zentrierung der Palette (1) in einer Querrichtung auf den Schienen zu ermöglichen.

## Claims

1. A pallet (1) for transporting workpieces to be machined along a machining line, wherein the pallet (1) has a base frame (2) and at least one assembly (3) exhibiting at least one clamping device (4) for the workpiece to be machined, wherein the assembly (3) can be fixed along with the at least one clamping device (4) in respect of the base frame (2) rotatably about at least one rotational axis (a) and in a predefinable position to prevent rotation of the assembly (3) about the rotational axis (a) in respect of the base frame (2), **characterized in that** the base frame (2) has at least one outwardly projecting buffer (16) on each of its front ends, wherein the base frame (2) has at least one cover plate (17) on each of its front ends, which cover plate covers the buffer (16) assigned in each case and extends over the width of the front end in each case.

2. The pallet according to claim 1, **characterized in that** the assembly (3) is connected to the base frame (2) with a force- and/or frictional fit.

3. The pallet according to claim 1 or 2, **characterized in that** the base frame (2) and the assembly (3) each have toothed gearing (6, 7) in the region of a connection point which are engaged with one another in a fixed position of the assembly (3) in respect of the base frame (2).

4. The pallet according to claim 3, **characterized in that** the toothed gearings (6, 7) are each arranged along at least one portion of a circular line or an arcuate line.

5. The pallet according to one of claims 1 to 4, **characterized in that** the base frame (2) has guide elements (13, 14) for rails at an end region facing away from the assembly (3).

6. The pallet according to claim 5 **characterized in that** at least one of the guide elements (13, 14) has at least one groove (15) running in the longitudinal direction of the guide element (13, 14), in order to allow centring of the pallet (1) on the rails in a transverse direction.

## Revendications

1. Palette (1) pour le transport de pièces à usiner le long d'une ligne usinage, la palette (1) comprenant une infrastructure (2) et au moins une structure (3) comprenant un dispositif de serrage (4) pour la pièce à usiner, la structure (3) pouvant être tournée, avec l'au moins un dispositif de serrage (4), par rapport à l'infrastructure (2) autour d'au moins un axe de rotation (a) et pouvant être fixée dans une position prédéterminée contre une rotation de la structure (3) autour de l'axe de rotation (a) par rapport à l'infrastructure (2), **caractérisée en ce que** l'infrastructure (2) comprend, sur chacune de ses extrémités frontales, un tampon (16) en saillie vers l'extérieur, l'infrastructure (2) comprenant, à chacune de ses extrémités frontales, au moins une tôle de recouvrement (17) qui recouvre le tampon (16) correspondant et s'étend sur la largeur de l'extrémité frontale correspondante.

2. Palette selon la revendication 1, **caractérisée en ce que** la structure (3) est reliée par force et/ou par friction avec l'infrastructure (2).

3. Palette selon la revendication 1 ou 2, **caractérisée en ce que** l'infrastructure (2) et la structure (3) comprennent, au niveau d'un point de liaison, des dentures (6, 7) qui s'engrènent entre elles dans une position fixe de la structure (3) par rapport à l'infrastructure (2).

4. Palette selon la revendication 3, **caractérisée en ce que** les dentures (6, 7) sont disposées chacune le long d'au moins une portion d'une ligne circulaire ou d'une ligne d'arc.

5. Palette selon l'une des revendications 1 à 4, **caractérisée en ce que** l'infrastructure (2) comprend, au niveau de la zone d'extrémité opposée à la structure (3), des éléments de guidage (13, 14) pour des rails.

6. Palette selon la revendication 5, **caractérisée en ce qu'**au moins un des éléments de guidage (13, 14) comprend une rainure (15) s'étendant dans la direction longitudinale de l'élément de guidage (13, 14), afin de permettre un centrage de la palette (1) dans une direction transversale sur les rails.
